(19) Europäisches Patentamt
European Patent Office
Office européen des brevets

(11) **EP 2 263 068 B1**

(12) **FASCICULE DE BREVET EUROPEEN**

(45) Date de publication et mention
de la délivrance du brevet:
**03.10.2018 Bulletin 2018/40**

(21) Numéro de dépôt: **09729967.1**

(22) Date de dépôt: **14.04.2009**

(51) Int Cl.:
*G01M 7/08* (2006.01)    *G01M 13/00* (2006.01)

(86) Numéro de dépôt international:
**PCT/EP2009/002733**

(87) Numéro de publication internationale:
**WO 2009/124781 (15.10.2009 Gazette 2009/42)**

(54) **PROCEDE ET DISPOSITIF POUR CONTROLER LA QUALITE, PARTICULIEREMENT LA RAIDEUR ET LA PHASE, D'UNE ARTICULATION HYDRO ELASTIQUE**

VERFAHREN UND EINRICHTUNG ZUM ÜBERWACHEN DER QUALITÄT, INSBESONDERE DER STEIFIGKEIT UND DER PHASE, EINES HYDROELASTISCHEN GELENKS

METHOD AND DEVICE FOR MONITORING THE QUALITY, PARTICULARLY THE STIFFNESS AND THE PHASE, OF A HYDROELASTIC JOINT

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **11.04.2008 FR 0852465**

(43) Date de publication de la demande:
**22.12.2010 Bulletin 2010/51**

(73) Titulaire: **Anvis SD France SAS**
**58302 Decize Cedex (FR)**

(72) Inventeur: **VERGER, Serge**
**F-58260 La Machine (FR)**

(74) Mandataire: **Schmid, Nils T.F.**
**Boehmert & Boehmert**
**Anwaltspartnerschaft mbB**
**Pettenkoferstrasse 22**
**80336 München (DE)**

(56) Documents cités:
**DE-A1- 10 340 138        JP-A- 2006 292 481**
**US-A1- 2003 172 714**

• **William Halvorsen: "Impulse technique for structural frequency response", , 30 November 1977 (1977-11-30), XP055210115, Retrieved from the Internet: URL:http://www.modalshop.com/filelibrary/A R-8_Halvorsen _Brown_Sound_and_Vibration 1977.pdf [retrieved on 2015-08-28]**
• **"The Fundamentals of Modal Testing", , 31 May 2000 (2000-05-31), pages 1-56, XP055102951, USA Retrieved from the Internet: URL:http://cp.literature.agilent.com/litwe b/pdf/5954-7957E.pdf [retrieved on 2014-02-18]**

# EP 2 263 068 B1

## Description

L'invention concerne un procédé et un dispositif pour contrôler la qualité, particulièrement la raideur et la phase, d'une articulation hydro élastique ou non. Le domaine d'emploi le plus fréquent de ces pièces est celui des liaisons au sol des automobiles ou véhicules utilitaires, en particulier comme intercalaires entre berceau et châssis ou comme support moteur, ou comme amortisseur de vibrations de torsion dans les liaisons au sol ou les transmissions. Dans ce qui suit nous utiliserons pour ces cales, paliers ou articulations le terme générique « articulation » sauf dans le cas des descriptions ou particularités spécifiques à l'un ou l'autre de ces produits.

Ces articulations sont situées à l'interface de deux pièces à assembler et elles sont destinées à filtrer et déphaser les vibrations transmises entre l'une et l'autre des pièces à assembler. Ces articulations sont habituellement constituées de deux armatures métalliques avec une première armature extérieure de forme cylindrique à profil quelconque, et une deuxième armature également de forme cylindrique située en grande partie à l'intérieur du volume défini par la première. Ces deux armatures sont reliées entre elles par des pièces en caoutchouc ou élastomère avec le cas échéant d'autres pièces en plastique ou en métal. La forme et l'agencement des pièces entre les deux armatures est parfois tel que se trouve aménagé entre les deux armatures au minimum une ou plusieurs chambres hydro élastique hermétiques communiquant entre elles par des orifices calibrés, cette ou ces chambres étant remplie(s) d'un liquide type eau ou glycol, ou d'un gaz. L'ensemble des composants situé entre les deux armatures forme avec ces dernières un tout en général indémontable. C'est cet ensemble qui est nommé « articulation ». L'articulation possède un axe théorique principal de travail qui s'avère être dans certains types d'articulations également l'axe de symétrie des deux armatures. Cet axe théorique de travail est l'axe de translation axiale ou radiale d'une armature par rapport à l'autre en fonctionnement sur véhicule, ou l'axe de rotation d'une armature par rapport à l'autre en fonctionnement sur véhicule, ceci en supposant que l'articulation n'est pas soumise à des efforts excentrés ou à des efforts parasites qui tendent à la déformer. Ces articulations ainsi constituées sont l'objet du procédé et du dispositif suivant la présente invention.

Les deux armatures respectivement intérieure et extérieure de ces articulations sont fixées respectivement aux deux pièces à assembler. Les vibrations en dynamique qu'une pièce communique à l'autre sont ainsi obligées de passer par le système mixte « caoutchouc, plastique et éventuelles chambres hydro élastiques » situé entre les deux armatures et reliant ces dernières. La conséquence est un déphasage entre signaux d'entrée et de sortie, ce déphasage étant variable avec la fréquence d'excitation. On comprend ainsi toute l'importance que revêt la qualité de la filtration de ce système aux différentes fréquences possibles d'excitation ; une articulation présentant un défaut de fabrication pouvant être jugée bonne en déphasage à une fréquence donnée et mauvaise pour une autre fréquence d'excitation. Or la qualité de filtration d'une articulation est capitale pour le confort du véhicule sur toute la plage de fréquence considérée.

Dans l'état actuel de la technique on utilise pour contrôler la qualité des articulations en production une machine servo-hydraulique appliquant, à une fréquence donnée, un déplacement sinusoïdal d'amplitude constante à l'une des armatures et on mesure sur l'autre armature l'effort, la raideur et la phase du signal de sortie. Ces valeurs en signal de sortie dépendent de la fréquence du signal d'entrée et changent fortement avec la fréquence de façon non proportionnelle. Une figure annexée A montre le principe de fonctionnement schématique de la technique antérieure pour contrôler la qualité d'une articulation. L'articulation a comprend une première armature b et une deuxième armature c. La première armature est connectée à la deuxième armature par un ressort d et, en parallèle, un amortisseur e. La première armature b est fixée et la deuxième armature c est excitée par un générateur de fréquence avec une amplitude constante, une fréquence croissante et une force f prédéterminée. Les caractéristiques de l'articulation a sont déterminées par un balayage de fréquences. Un balayage de fréquence dure très longtemps, par exemple beaucoup plus de 30 secondes. De plus, les appareils pour faire un tel balayage de fréquence sont extrêmement chers. Pour éviter de passer trop de temps à contrôler ces valeurs on se contente de les contrôler pour quelques fréquences précises de signal sinusoïdal d'entrée, parfois pour une seule fréquence. On fait alors une impasse sur de possibles dérives qualité de l'articulation pour d'autres fréquence. On appelle ces contrôles à des fréquences différentes des « points de contrôle ». Même en se limitant à quelques points de contrôle on arrive à des temps de cycle de plus de 10 secondes pour le contrôle d'une articulation, ce qui est trop important pour intégrer de telles machines de test en ligne de production. Il faut donc faire ces contrôles en reprise, dans un autre atelier hors ligne, sans possibilité de réaction immédiate sur la qualité des opérations en amont pour corriger une éventuelle dérive. La notion de contrôle en continu avec influence immédiate sur le processus de production des armatures en amont est économiquement impossible.

D'autre part les constructeurs automobile qui achètent ces articulations demandent simplement le respect de leur cahier des charges sur toute une plage de fréquence ; si ils imposent par exemple une raideur minimale ne dépassant pas telle valeur dans telle plage de fréquence il peut arriver qu'en contrôlant les articulations à une seule fréquence précise avec la méthode actuelle, on déclare à tort la pièce mauvaise parce qu'on n'a pas testé l'articulation à des fréquences voisines. Inversement on peut supposer à tort que l'articulation est bonne à partir d'un seul point de contrôle positif alors que la réponse fréquentielle montre des dérives dans d'autres plages de fréquence. Il faudrait donc multiplier le nombre de points de mesure ce qui n'est pas envisageable industriellement.

Enfin dans l'état actuel de la technique on applique en entrée le déplacement sinusoïdal sur une armature en un point donné de cette dernière et suivant une direction donnée. Or ces articulations ont plusieurs degrés de liberté et sont amenées à travailler parfois de façon légèrement désaxée sur véhicule. Les machines actuelles de test ne permettent pas de tels contrôles dans des positions désaxées de façon industrielle et économique.

US 2003/0172714 A1 concerne un appareil d'évaluation de performances d'amortissement pour les dispositifs d'amortissement.

La publication "Impulse Technique for Structural Frequency Response Testing" (William G. Halvorsen, David L. Brown; 30 novembre 1977) traite des tests de réponse en fréquence structurelle.

La publication "The Fundamentals of Modal Testing" (Agilent Technologies, 31 mai 2000) se réfère à des techniques d'analyse modale expérimentale.

JP 2006 292481 A concerne un procédé pour tester des plastiques renforcés de fibres.

DE 103 40 138 A1 concerne un dispositif pour la réalisation d'une analyse expérimentale du modèle d'un composant.

Dans la demande de brevet US 2003/0172714 A1 un appareil et un procédé pour l'évaluation d'un amortisseur sont divulgués. L'appareil utilise un bras auquel un marteau est fixé qui chute par la force de gravitation à partir d'une position de repos prédéterminée sur l'amortisseur de vibrations pour produire un impact. Une analyse de fréquence est utilisée pour déterminer la fréquence de résonance. En outre, à partir d'une valeur maximale d'une analyse spectrale un bon produit peut être distingué d'un mauvais produit. Par le procédé divulgué dans cette demande de brevet les caractéristiques du membre hydraulique d'une articulation hydro élastique ne peuvent pas être contrôlées. De plus, la cadence de contrôles est limitée par le temps de mouvement du bras d'une position d'impact à la position de repos prédéterminée et le temps de chute.

L'Objet de l'invention est de mettre à la disposition un procédé pour contrôler la qualité, particulièrement les caractéristiques de l'amortissement du membre hydraulique, d'une articulation hydro élastique, dans un temps de cadence extrêmement court.

Ce procédé est l'utilisation en ligne de production, sans ralentissement de la cadence de production des articulations, d'un instrument de choc, perfectionné par rapport à l'état de l'art existant, venant impacter sur une durée inférieure à 15 millisecondes une première armature, combiné avec l'analyse de la réponse en raideur et phase sur la gamme de fréquence totale entre 0 et 2000 Hz, le plus généralement entre 0 et 1000 Hz, de cette même armature et la discrimination simultanée des pièces bonnes ou mauvaises avec indication de la nature de la malfaçon éventuelle, tandis que la deuxième armature est maintenue fixée pendant tout ce test par un dispositif de serrage extérieur, le tout y compris la mise en place de l'articulation et son évacuation après impact et mesure en moins de 10 secondes. Avantageusement l'analyse fréquentielle du signal de sortie de l'une des armatures, quand on lui applique un impact, permettant une comparaison en tout ou partie à une bande passante autorisée pour détecter automatiquement les points qui sortent de la tolérance et à quelle fréquence cela se produit. La technique des impacts, encore appelée du « marteau instrumenté » ou « impulse test », est connue depuis longtemps. La théorie repose sur l'utilisation d'un impact très bref, proche d'une impulsion de Dirac, destiné à exciter une structure, et sur la transformation en analyse de Fourier de la réponse de cette structure sur toute une plage de fréquence. Elle est appliquée par exemple à des pièces pour vérifier leur fonctionnement ou leur intégrité, comme dans le brevet US 4,342,229 du 3 aout 1982, le brevet WO/2006/074506 publié le 20/7/06 ou le brevet JP 2006292481 publié le 26/10/06. Par contre cette technique n'a jamais à notre connaissance été utilisée pour contrôler une production en grande série d'articulations avec ou sans chambres hydro élastiques, en analysant simultanément l'impact et ses conséquences en déplacement, effort et déphasage sur une même armature, tout en triant les pièces bonnes des mauvaises sans ralentir la cadence de la ligne de production. Il s'agit donc de l'application nouvelle à la famille des articulations d'un procédé existant afin de pouvoir intégrer ce contrôle en ligne de production en respectant une cadence inférieure à 10 secondes de temps de cycle et afin de pouvoir écarter les articulations mauvaises sans risquer de se tromper ni d'écarter des pièces bonnes, et de pouvoir connaître l'origine de la non-conformité par l'analyse des résultats. Selon la revendication 1, l'invention concerne un procédé pour contrôler la qualité, particulièrement la raideur et la phase, d'une articulation destinée à relier deux autres pièces en filtrant la transmission des vibrations entre ces deux autres pièces. Ladite articulation est appelée à travailler en axial, radial ou en torsion, possédant ou non une ou plusieurs chambres hydro élastiques particulièrement remplies par un fluide hydro, comme un liquide ou un gaz hydro, et étant composées de deux armatures cylindriques concentriques, l'armature intérieure étant en grande partie située dans le volume défini par l'armature extérieure, ces deux armatures étant reliées par un ensemble de composants en caoutchouc ou élastomère et le cas échéant de plastique et pièces métalliques, lesdites armatures étant elles mêmes fixées respectivement aux deux autres pièces que l'articulation relie. On applique dans le procédé une technique du contrôle par impact à la cadence de la ligne de production des articulations, soit moins de 10 secondes de temps de cycle, pour identifier lors d'une analyse fréquentielle de l'oscillation de la zone d'articulation impactée les pièces bonnes des mauvaises. Les valeurs de déphasage de l'analyse fréquentielle sont comparées avec une bande passante de déphasage autorisée. Par exemple, la bande passante de déphasage autorisée peut être définie par une enveloppe. Typiquement, les valeurs de déphasage issue de l'analyse fréquentielle sont comparées dans au moins une plage de fréquence limitée donnée, la bande de fréquence donnée se situant en particulier dans la plage de fréquence totale de 0 à 2000 Hz. Les valeurs de déphasage issue de l'analyse fréquentielle sont comparées dans au moins deux plages de fréquence limitées donnée(s), la plage de fréquence limitée donnée se situant dans la plage de fréquence totale de 0 à 2000 Hz, en particulier les plages de fréquences limitées données étant écartées l'un à l'autre, en particulier d'au moins 10Hz.

Par exemple, une plage de fréquence limitée est définie autour d'une valeur de fréquence d'un maximum relatif et/ou d'un minimum relatif du déphasage, en particulier d'une courbe de référence de déphasage.

Dans un mode de réalisation, une plage de fréquence s'étend d'environ 100Hz à environ 200 Hz, en particulier entre environ 120Hz et environ 180Hz, d'environ 200Hz à environ 300 Hz, en particulier entre environ 220Hz et environ 290Hz et/ou d'environ 350Hz à environ 450 Hz, en particulier entre environ 370Hz et environ 430Hz. Dans un autre mode de réalisation les valeurs de déphasage ou du module de plusieurs plages de fréquences limitées sont comparées avec des valeurs de référence, par exemple une bande passante autorisée.

Dans un autre exemple, une plage de fréquence est définie autour d'une valeur de fréquence de passage de 90 ou 180 dégrées du déphasage d'une courbe de référence. Selon la revendication 4, l'invention concerne un procédé pour contrôler la qualité, particulièrement la raideur et la phase, d'une articulation destinées à relier deux autres pièces en filtrant la transmission des vibrations entre ces deux autres pièces, ladite articulation appelée à travailler en axial, radial ou en torsion, possédant ou non une ou plusieurs chambres hydro élastiques particulièrement remplies par un fluide hydro, comme un liquide ou un gaz hydro, et étant composées de deux armatures cylindriques concentriques, l'armature intérieure étant en grande partie située dans le volume défini par l'armature extérieure, ces deux armatures étant reliées par un ensemble de composants en caoutchouc ou élastomère et le cas échéant de plastique et pièces métalliques, lesdites armatures étant elles mêmes fixées respectivement aux deux autres pièces que l'articulation relie, en appliquant une technique du contrôle par impact à la cadence de la ligne de production des articulations, soit moins de 10 secondes de temps de cycle, pour identifier lors d'une analyse fréquentielle de l'oscillation de la zone d'articulation impactée les pièces bonnes des mauvaises dans une plage de fréquence totale, en particulier de 0 à 2000 Hz, caractérisé en ce que des valeurs de module de l'analyse fréquentielle sont comparées avec une bande passante de module autorisée qui enveloppe une courbe de module de référence dans une plage de fréquence limitée, en particulier entre environ 50 et environ 250 Hz, comprise dans la plage de fréquence totale, et en ce que la plage de fréquence limitée est définie autour d'une fréquence d'un premier pic de résonance de la courbe de référence, la fréquence du premier pic de résonance ayant une fréquence inférieure à une valeur de fréquence d'un deuxième pic de résonance de la courbe de référence. Selon l'invention, on compare les valeurs de module issue de l'analyse fréquentielle de l'oscillation de l'armature impactée dans deux plages de fréquence limitées, la première plage de fréquence limitée étant définie autour de la fréquence du premier pic de résonance de la courbe de référence et la deuxième plage de fréquence limitée est écartées de la première plage de fréquence limitée, en particulier d'au moins 100Hz.

Dans un mode de réalisation, une plage de fréquence limitée s'étend d'environ 50Hz à environ 250 Hz, en particulier entre environ 100Hz et environ 200Hz.

Dans un exemple d'un mode de réalisation, les valeurs de module issues de l'analyse fréquentielle de l'articulation contrôlée, en particulier dans la plage de fréquence limitée, forment une courbe, la courbe présentant un maximum relatif et puis un minimum relatif, la fréquence du minimum relatif étant comparée avec une bande de fréquence prédéterminée, en particulier la bande de fréquence étant comprise entre environ 140 et environ 150 Hz, de préférence la fréquence étant dans la bande de fréquence prédéterminée pour les pièces bonnes et/ou la deuxième courbe présentant un maximum relatif et puis un minimum relatif, la valeur du minimum relatif étant comparée à une valeur prédéterminée, en particulier la valeur du minimum relatif étant inférieur ou égal à la valeur prédéterminée pour les pièces bonnes.

Dans un mode de réalisation la deuxième plage de fréquence limitée est définie autour de la fréquence du deuxième pic résonance de la courbe de référence, en particulier étant le maximum absolu de la courbe de module de référence, de préférence entre environ 350 et environ 450 Hz, et/ou la deuxième plage de fréquence limitée s'étend de environ 500Hz à environ 800 Hz, en particulier entre environ 550Hz et environ 700Hz. Dans un mode de réalisation la valeur de module du premier pic est inférieure à la valeur de module du deuxième pic.

Dans un autre mode de réalisation, la courbe de référence de module ou de déphasage dans l'espace de fréquence est générée par une analyse par impact d'une articulation de référence bonne ou une simulation numérique d'une articulation de référence bonne.

Dans un mode de réalisation, la bande passante autorisée enveloppant la courbe de module ou de déphasage de référence est formée d'une courbe de valeurs de module ou de déphasage maximales et un courbe de valeurs de module ou de déphasage minimales, la courbe de valeurs de module ou de déphasage maximales et minimales ayant en particulier une distance entre eux de moins d'environ 15 pour cent de la valeur maximale de la courbe de module ou de déphasage de référence, en particulier de moins d'environ 10 pour cent, de préférence de moins d'environ 5 pour cent.

De plus, il est prévu un arrangement pour contrôler la raideur ou la phase d'une articulation hydro élastique, l'articulation est prévu étant destinée à relier deux autres pièces en filtrant la transmission des vibrations entre ces deux autres pièces, ladite articulation appelée à travailler en axial, radial ou en torsion, possédant ou non une ou plusieurs chambres hydro élastiques particulièrement remplies par un fluide hydro, comme un liquide ou un gaz hydro, et étant composées de deux armatures cylindriques concentriques, l'armature intérieure étant en grande partie située dans le volume défini par l'armature extérieure, ces deux armatures étant reliées par un ensemble de composants en caoutchouc ou élastomère et le cas échéant de plastique et pièces métalliques, lesdites armatures étant elles mêmes fixées respectivement aux deux autres pièces que l'articulation relient, l'arrangement comprenant une tête d'impact pour exercer un impact sur l'une de ces armatures, et un support pour maintenir l'articulation serrée sans déformation irréversible au niveau de l'autre de ses armatures qui se trouve ainsi fixée sans déplacement possible, caractérisé en ce que l'arrangement comprend en outre un actionneur magnétoélectrique pour accélérer la tête d'impact sur l'armature.

Dans un mode de réalisation, l'arrangement est adapté pour exercer un effort de l'impact sur l'articulation entre 180N et 300N, de préférence entre 200N et 270N, en particulier autour de 210N.

L'arrangement, associé au procédé revendiqué, permet de contrôler en temps réel que l'impact créé sur l'armature est toujours fait sans rebond et dans un laps de temps sensiblement égal à la consigne retenue, elle-même inférieure aux 15 millisecondes indiquées plus haut et que le spectre d'effort d'impact et son niveau sont conformes à la consigne retenue. On parle ainsi de procédé et de dispositif d'impact perfectionné par rapport à l'état de l'art existant parce que le dispositif permet de s'auto contrôler c'est-à-dire de contrôler son propre processus d'impact en plus du contrôle du produit « articulation ».

Ce procédé se distingue aussi de l'état de l'art existant en matière de contrôle par impact en ce que la position du point d'impact sur l'une des deux armatures choisie, l'autre étant fixe, peut être lui-même choisi en dehors de l'axe théorique de travail ou de symétrie, tandis qu'il existe sur cette armature choisie plusieurs capteurs déplacement situés à des endroits tels qu'on simule le travail d'une articulation légèrement déformée en présence d'efforts centrés ou excentrés ou de couples ; ceci pour prendre en compte les déformations de l'articulation en fonctionnement réel sur véhicule et le fait que le déplacement de l'armature sur laquelle on mesure le signal de sortie n'est pas toujours colinéaire avec la direction de l'impact d'entrée. Bien entendu la réponse des différents capteurs de sortie est analysée de façon simultanée pour que la cadence de la ligne de production reste inchangée.

Ce procédé et son arrangement associé se distinguent également de l'art existant en matière de contrôle par impact en ce que l'on peut utiliser les capteurs de sortie pour venir appliquer un effort centré ou excentré sur l'armature dont on veut mesurer le déplacement en analyse fréquentielle, de façon à reproduire lors du contrôle une géométrie proche de conditions en service ; par exemple quand les axes des armatures extérieures et intérieures ne coïncident plus à cause des efforts transmis par les deux pièces à assembler. Ou par exemple quand les axes des deux armatures restent colinéaires mais qu'une des armatures a subi une rotation autour de cet axe par rapport à l'autre armature, ou qu'une armature a subi une translation suivant son axe par rapport à l'autre armature. Les efforts exercés restent bien entendu faibles et il n'est pas question de déformer de façon irréversible l'articulation. Une première variante pour contrôler une articulation légèrement déformée consiste à monter le capteur de sortie sur un dispositif élastique étalonné et à comprimer ce dispositif élastique jusqu'à ce que le capteur de sortie, en appui sur l'armature que l'on analyse, indique la force avec laquelle on veut pousser sur ladite armature. Ce capteur de sortie doit alors être du type actif pour qu'il puisse convertir les variations de charge en variations de tension. La force d'impact doit elle-même être supérieure à la force exercée par le capteur sur l'armature sur laquelle il s'applique. Une autre variante si on veut éviter de pousser directement avec le(s) capteur(s) consiste à exercer cet effort, sur l'armature destinée à être impactée, par un dispositif indépendant des capteurs de sortie ; par exemple un ressort étalonné ou tout autre dispositif élastique dont on connaît précisément la courbe caractéristique course - effort. Le(s) capteur(s) de sortie sont alors, pendant la mesure, fixés par un dispositif aimanté sur l'armature dont on analyse la réponse à un impact. Il peut aussi s'agir de capteurs laser qui ne nécessitent pas un contact direct avec l'armature

Bien entendu la force de l'impact est dans tous les cas choisie de telle manière qu'on ne risque pas d'endommager ou de déformer de façon irréversible l'articulation.

L'arrangement peut être aussi conçu de façon que le ou les capteur(s) de sortie se mettent automatiquement en contact avec l'armature dont on veut mesurer le déplacement en analyse fréquentielle ; cette condition sera avantageusement remplie par l'utilisation d'un support aimanté fixé au capteur, lequel support aimanté venant se fixer sur une zone définie de l'armature en question et de préférence coopérer géométriquement avec une partie de cette armature pour toujours bien localiser le capteur . Cette disposition est utile pour les capteurs types piezo électriques. Une autre solution consiste à venir appuyer le capteur avec une force précise à un endroit déterminé de l'armature dont on veut mesurer le déplacement en analyse fréquentielle de façon à ce que ladite force provoque une déformation réversible de l'articulation et ainsi se rapprocher de certaines conditions d'utilisation en service. Bien entendu on peut aussi mesurer le signal de sortie par des capteurs sans contacts type laser, ou faire un mixte entre type de capteurs de sortie, les uns étant avec simple contact aimanté, d'autres pouvant exercer un effort et d'autres sans contact.

La description suivante permet d'apporter un certain nombre de précisions ou variantes aux principales caractéristiques expliquées ci-dessus, et de montrer quelques exemples de dispositifs répondant à la présente invention

La figure 1 est une vue schématique en coupe d'un dispositif conforme à la présente invention pour contrôler une articulation type cale support hydro élastique à fonctionnement axial.

La figure 2 est une vue schématique en perspective du mode de serrage de l'articulation de la figure 1 dans son montage de contrôle.

La figure 3 est une vue schématique en coupe d'un dispositif conforme à la présente invention pour contrôler une articulation type palier hydro élastique à fonctionnement radial.

La figure 4 est une vue schématique en coupe d'un dispositif conforme à la présente invention pour contrôler un palier destiné à travailler en torsion.

La figure 5 détaille un mode de conception particulier du système d'impact.

La figure 6 montre schématiquement un autre mode de conception du système d'impact.

La figure 7a montre sous forme de courbe les signaux fournis par un capteur d'effort situé dans un système d'impact.

La figure 7b montre sous forme de courbe les signaux fournis par un capteur de déplacement.

La figure 8 montre un principe de fonctionnement schématique d'un contrôle d'une articulation hydro élastique.

La figure 9 montre sous forme de courbe l'analyse fréquentielle d'un signal fourni par un capteur d'effort.

La figure 10a montre sous forme de courbe de module l'analyse fréquentielle des signaux fournis par un capteur de déplacement et d'effort lorsque l'armature sur laquelle il est appliqué est excitée par un impact.

La figure 10b montre sous forme de courbe de déphasage l'analyse fréquentielle des signaux fournis par un capteur d'effort et un capteur de déplacement lorsque l'armature sur laquelle ils sont appliqués est excitée par un impact.

La figure 11 et la figure 12 schématisent l'application du présent procédé à des articulations volontairement déformées par translation ou rotation d'une armature par rapport à l'autre.

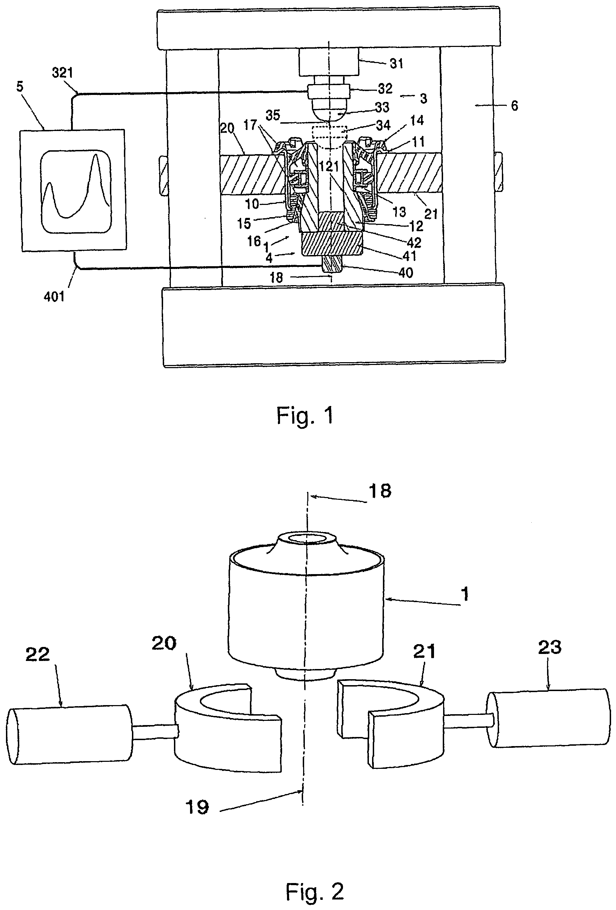

Dans la figure 1 l'articulation hydro élastique 1 est constituée d'une armature cylindrique extérieure métallique 10 présentant une collerette rabattue 11, d'une armature intérieure 12 coaxiale à l'origine avec l'armature extérieure 10, d'un intercalaire en plastique 13 emmanché sur l'armature intérieure 12, de plusieurs parties en élastomère 14, 15 et 16 adhérisées, collées ou emmanchées sur l'une et/ou l'autre des armatures, et enfin de deux chambres hydro élastiques 17. L'articulation 1 possède dans le cas présent un axe de travail théorique 18 qui est en même temps l'axe de symétrie de l'articulation. Cette articulation est placée lors du cycle de production entre deux demi coquilles 20 et 21 qui serrent l'articulation au niveau de son armature extérieure 10 avec une force suffisante pour éviter tout glissement lors de l'impact, tout en évitant toute déformation irréversible de l'articulation. Dans le cas présent la collerette circulaire 11 de l'armature extérieure 10 vient s'appuyer sur les demi-coquilles 20 et 21 ; mais certaines articulations similaires n'ont pas de collerette et il est donc important de bien maîtriser la force de maintien des deux demi coquilles 20 et 21 sur l'armature qu'elles maintiennent. Ces demi-coquilles 20 et 21 peuvent prendre plusieurs formes et moyens de fermeture et serrage. Elles doivent cependant avoir une masse et une raideur suffisante pour ne pas perturber l'analyse des signaux de sortie.

Le système d'impact est représenté par l'ensemble 3 qui comprend un vérin spécial 31, un capteur d'effort 32 situé sur la tige de sortie du vérin et un embout d'impact 33. Lorsque l'impact est déclenché le système 3 propulse l'embout 33 contre l'armature intérieure 12 selon la direction 35 elle-même colinéaire dans le cas présent avec l'axe de travail théorique 18 de l'articulation. Lors de l'impact l'embout 33 est représenté en 34 sur cette figure et le contact avec l'armature intérieure 12 se fait uniformément sur le bord de l'alésage intérieur 121 de cette armature. Dès l'impact réalisé le système 3 remonte instantanément pour éviter le maintien en contact de l'embout 33 sur l'articulation. On ne sort pas du cadre de la présente invention en disposant le système d'impact un peu plus à droite ou à gauche de l'axe de travail théorique 18. L'impact créé par le choc entre l'embout 33 et l'armature intérieure 12 est alors fait de façon excentrée par rapport à l'axe 18. On ne sort pas non plus du cadre de la présente invention en bridant l'armature intérieure 12 de l'articulation et en faisant l'impact et les mesures de déplacement sur l'armature extérieure 10 si la forme de l'articulation se prête mieux ainsi à ce procédé d'impact. C'est alors l'armature intérieure 12 qui doit être rigidement fixée, par exemple grâce à un mandrin expansible qui viendrait se loger dans l'alésage 121 de l'armature intérieure 12 et vient ensuite bloquer cette armature pendant le test d'impact sur l'armature extérieure 10.

Dans cette figure 1 le système de mesure des conséquences de l'impact sur l'armature 12 est représenté en 4 ; il comporte un capteur de sortie 40 mesurant l'accélération de l'armature intérieure 12. Il est fixé à un petit aimant 41 dont une partie cylindrique 42 vient se loger dans l'alésage 121 de l'armature intérieure 12 pour qu'une fois en position le capteur 40 se retrouve toujours au même endroit. Lorsque la mesure est terminée un petit système non représenté ici tire l'embout 42 de l'alésage 121 pour libérer le capteur 40 de l'articulation 1.

Dans un mode de réalisation le capteur de sortie 40 peut être un capteur de vitesse pour enregistrer les oscillations de l'armature impactée.

Le capteur d'effort d'impact 32 et le capteur d'accélération 40 sont tous deux respectivement connectés à une centrale d'acquisition et un ordinateur 5 par les liaisons 321 et 401. L'ordinateur 5 permet de faire l'analyse fréquentielle en utilisant la transformée de Fourier du signal de sortie par rapport au signal d'entrée. On détecte ainsi les accélérations, raideurs, pics d'amplification ou d'amortissement et les déphasages correspondants, et ce pour toutes les fréquences d'une plage allant habituellement de 0 à 2000 Hz, de l'armature 12 quand elle est excitée par un impact. La limite de 2000 Hz est ici donnée à titre indicatif et dépend du type d'articulation et du cahier des charges du client ; dans certaines applications on se limitera à 800 Hz, dans d'autres à 1000 Hz ou 1500 Hz.

L'ensemble de ce dispositif est fixé sur un portique 6. La mise en oeuvre du présent dispositif suivant l'invention consiste à venir manuellement ou automatiquement placer l'articulation 1 entre les demi coquilles 20 et 21, serrer ces dernières sur l'armature extérieure de cette articulation, déclencher l'impact sur l'armature intérieure 12 et mesurer les déplacements ou accélérations de cette armature 12 lorsqu'elle est excitée par l'impact. Lorsque la mesure est terminée les deux demi-coquilles s'écartent pour qu'on puisse libérer l'articulation qui, selon qu'elle est bonne ou mauvaise, sera aiguillée manuellement ou automatiquement dans le bac approprié.

La figure 2 est une vue schématique du système de maintien et de serrage d'une articulation suivant la présente invention. L'articulation 1 est mise en place entre les deux demi coquilles 20 et 21 de façon que l'axe 18 de l'articulation coïncide sensiblement avec l'axe 19 du dispositif. On peut disposer une des deux demi coquilles, par exemple la 21, déjà en position fixe ou presque refermée pour faciliter la mise en place de l'articulation 1. Ensuite les deux demi-coquilles se referment sur l'articulation 1 et viennent la serrer sur son armature extérieure 10. Les deux axes 18 et 19 sont alors confondus.

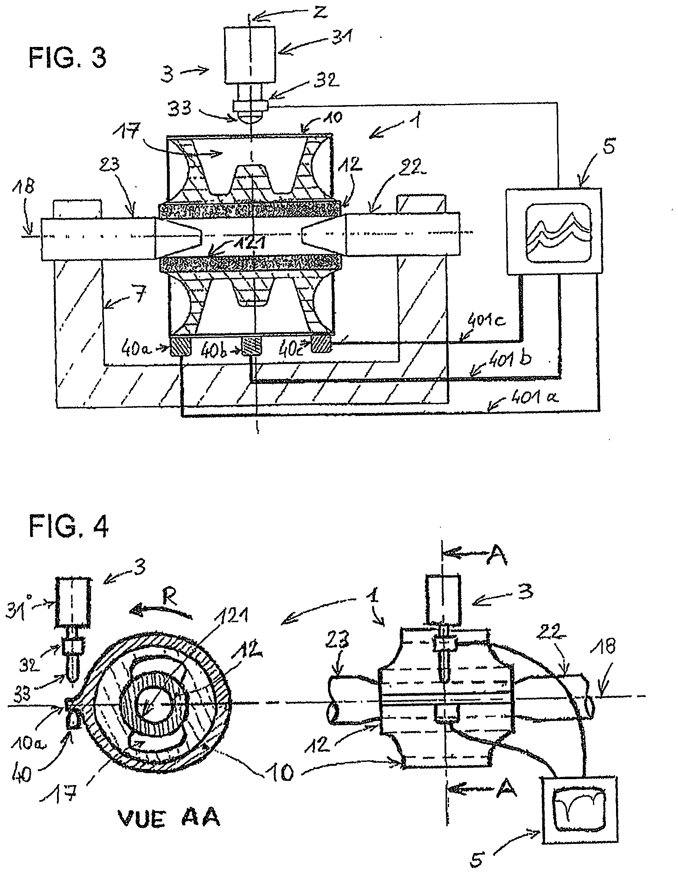

La figure 3 représente l'application de la présente invention à un autre type d'articulation. Ce type d'articulation est destiné à travailler radialement et non plus axialement. Cette fois c'est l'armature intérieure 12 qui est rigidement maintenue par deux embouts 22 et 23 venant la positionner et la coincer au niveau de son alésage 121. On a représenté ici en 17 des chambres hydro élastiques mais rappelons qu'on ne sort pas du cadre de la présente invention si l'articulation ne possède pas de telles chambres. Le dispositif d'impact 3 est ici représenté colinéaire avec l'axe Z radial passant par le milieu de l'articulation. Sans sortir du cadre de la présente invention on peut aussi décaler l'axe du système d'impact 3 pour que l'impact se fasse vers l'une quelconque des extrémités de l'armature extérieure 10 et pouvoir ainsi examiner le comportement vibratoire de l'armature 10 quand elle est sollicitée par un impact qui l'oblige à se mouvoir partiellement en conique, c'est-à-dire quand l'axe 18 de l'armature intérieure n'est plus en même temps celui de l'armature extérieure 10.

On a disposé trois capteurs de déplacement respectivement 40a, 40b et 40c sur la périphérie de l'armature 10. Ces capteurs sont préférentiellement disposés sur une génératrice du cylindre formant l'armature 10 placée à l'opposé de celle sur laquelle se fait l'impact. On peut toutefois disposer ces trois capteurs sur d'autres génératrices pour prendre en compte les déplacements transversaux de l'armature 10, en particulier si on veut s'assurer que l'articulation a un comportement homogène en radial. Les trois capteurs sont soit fixés sur l'articulation avec un aimant, soit sont sans contact du type laser. On ne sort pas du cadre de la présente invention si au lieu de trois capteurs on en met un nombre quelconque, pourvu que le système d'acquisition et de traitement du signal 5 soit capable de traiter simultanément toutes les informations transmises dans un délai inférieur à 10 secondes, mise en place de l'articulation sur son montage de mesure 7, impact et évacuation de l'articulation après mesure compris. Les informations du peson 32 sont acheminées au centre de traitement 5 par la connexion 321. Les informations des capteurs 40a, b et c sont acheminées de façon séparée par leurs connexions respectives 401 a, b et c.

La figure 4 représente un mode d'application de la présente invention à des articulations travaillant en torsion. La vue à gauche est une vue en coupe AA de la vue de droite. Le mode de travail de telles articulations consiste à faire tourner une armature par rapport à l'autre, et à amortir et déphaser les mouvements relatifs grâce à la présence d'élastomère et de chambres hydro élastiques entre ces deux armatures. Comme précédemment ces armatures sont fixées respectivement à deux autres pièces qu'elles permettent de relier tout en filtrant les vibrations transmises de l'une à l'autre. L'articulation possède toujours une armature extérieure 10 et une armature intérieure 12. Ces deux armatures sont cylindriques, concentriques et d'axe de révolution 18. L'armature intérieure 12 est maintenue bridée et immobile par les deux embouts 22 et 23 respectivement qui s'appuient sur l'alésage 121 de l'armature intérieure 12. On peut aussi brider l'armature intérieure 12 par tout autre moyen, comme un mandrin expansible venant dans l'alésage 121 par exemple, et ceci sans sortir du cadre de la présente invention.

L'armature extérieure 10 étant amenée en service à tourner autour de l'armature intérieure 12 elle est habituellement pourvue d'un ou plusieurs ergots 10a permettant de transmettre un mouvement de rotation suivant une direction R. Sans sortir du cadre de la présente invention il peut s'agir d'un ou plusieurs ergot ou d'un crantage ou d'une succession de dents d'engrenage, toutes ces formes étant possibles et étant déterminées le plus souvent selon la manière dont cette armature extérieure est fixée à la pièce correspondante. Dans la figure 4 on a représenté un seul ergot 10a pour simplifier. C'est sur cet ergot que l'on va venir exercer un impact par un embout 33 commandé par le système d'impact 3. L'armature intérieure 12 étant fixée au montage de mesure c'est l'armature extérieure 10 qui va se mettre en mouvement à cause de l'excitation due à l'impact. Un capteur de mouvement et d'accélération 40 va enregistrer le signal de sortie qui lui-même sera traité par l'ordinateur 5 en même temps que le signal venant du peson 32 du système d'impact 3. Si l'analyse fréquentielle du signal de sortie indique une anomalie l'articulation sera déclarée mauvaise.

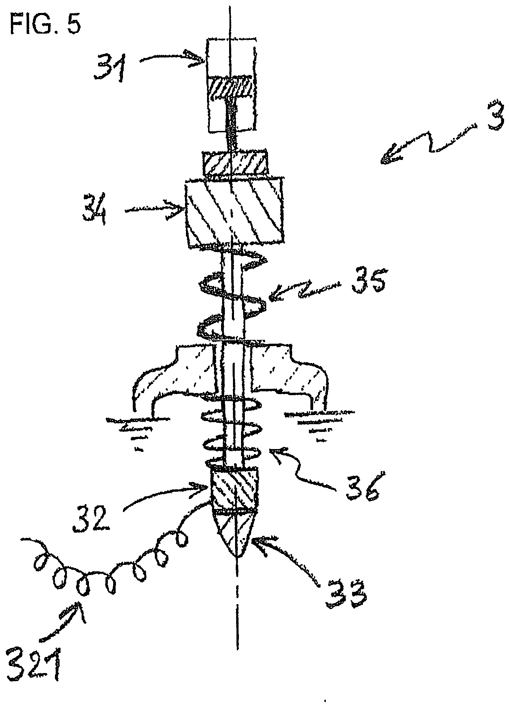

La figure 5 est une représentation schématique d'un générateur d'impact 3. Un vérin 31 vient actionner une masse 34 au bout de laquelle se trouve un peson 32 et le dispositif d'impact lui-même 33. Deux ressorts 35 et 36 permettent de faire varier les vitesses et énergie de l'impact pour l'adapter à la famille d'articulation à contrôler en ligne de production. Nous ne détaillerons pas davantage ce dispositif, à ceci près que le signal sortant du peson 32 par le câble 321 est utilisé non seulement pour l'analyse fréquentielle du rapport entre signal d'entrée et signal de sortie mais aussi pour vérifier que l'impact a été unique, sans rebond, en respectant une consigne de spectre d'effort, de niveau et de durée d'impact précise. Cette disposition permettant un auto contrôle du processus de mesure au cas où par exemple l'embout 33 viendrait à s'émousser, se casser, ou au cas où les ressorts 35 et 36 ne rempliraient plus leur rôle, ou au cas où le vérin 31 ne fonctionnerait plus correctement.

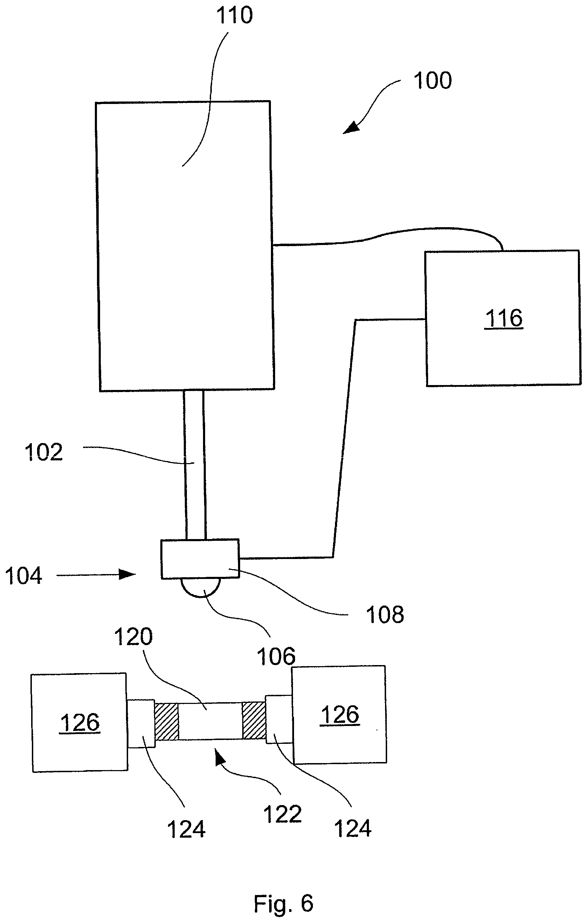

La figure 6 est une représentation schématique d'un autre mode de réalisation d'un générateur d'impact 100. Le générateur d'impact comprend une tige 102 avec une tête d'impact 104 à laquelle une pointe d'impact 106 est disposée avec laquelle une impulsion est exercée sur une armature 120 d'une articulation hydro élastique 122. Par exemple l'articulation hydro élastique peut être l'articulation montrée dans la figure 1. L'articulation hydro élastique comprend une deuxième armature 124 qui est maintenue par un support 126. La tête d'impact 104 comprend en outre un capteur d'effort 108 fixé à la tige, en particulier en forme d'un capteur piézo-électrique. En outre, un actionneur électromagnétique 110 est arrangé pour générer un déplacement de la tige. La tige, la tête d'impact, la pointe d'impact, et le capteur d'effort forment ensemble une partie mobile du générateur d'impact. La partie mobile peut être déplacé d'une première position de repos à une deuxième position d'impact ou la tête d'impact percute l'articulation. Dans un mode d'application un ressort est adapté pour retirer la partie mobile dans la position de repos après chaque impulsion. La partie mobile et donc la tête d'impact est accélérée par l'actionneur électromagnétique. L'effort du générateur d'impact est contrôlé par un contrôleur 116.

Par exemple, le générateur d'impact peut exercer un effort de 250N sur l'articulation. Dans un mode de réalisation la plage d'effort est entre 180N et 300N, de préférence entre 200N et 270N, par exemple autour de 210N. L'effort applicable sur l'articulation à tester est variable et peut être adapté à l'articulation à tester. Dans un mode d'exécution, le capteur d'effort 32 peut être un capteur piézo-électrique. L'impact et l'effort du générateur d'impact peuvent être exécutées et contrôlées par l'actionneur électromagnétique.

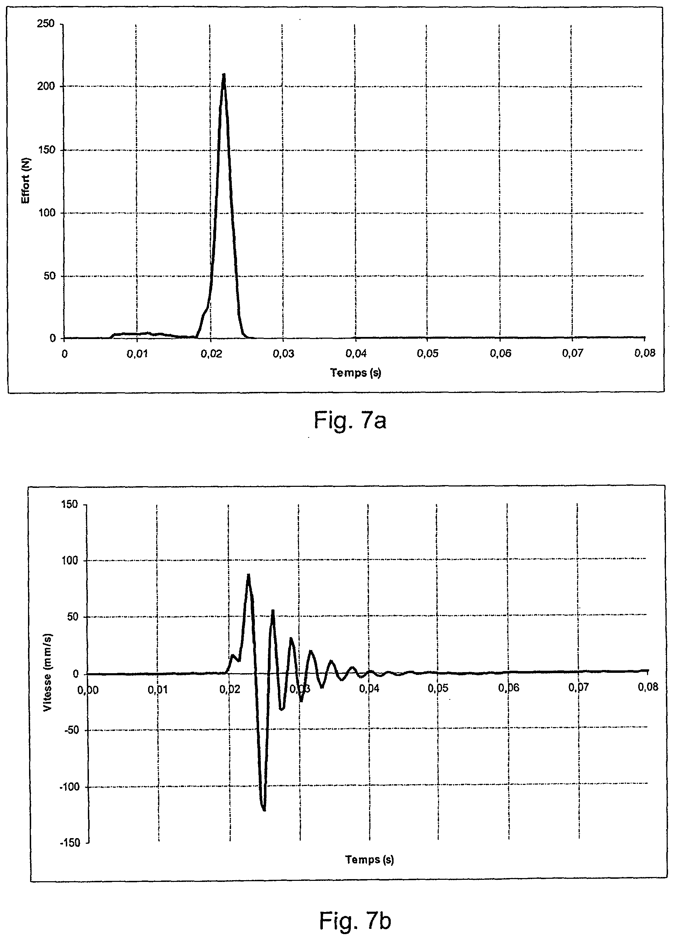

La Figure 7a montre une courbe d'impact exercé sur une articulation dans l'espace de temps. L'impact percute l'articulation peu avant 20 millisecondes avec un effort maximal d'à peu près 210N. L'impact dure entre 5 et 8 millisecondes. L'articulation est excitée par le générateur d'impact et exerce une oscillation amortie. Cette oscillation amortie est enregistrée par le capteur de déplacement 40. La figure 7b montre un signal de sortie du capteur de déplacement 40 de l'articulation qui est excitée par l'impact montré dans la figure 7a dans une forme d'une oscillation amortie. Or, la figure 7b montre la réponse impulsionnelle d'une articulation dans l'espace de temps.

Si un objet est excité avec une impulsion de Dirac, il est possible de déduire à partir de la réponse impulsionnelle la fonction de transfert du objet. Par exemple, si une articulation est excitée par une impulsion, il est possible de déduire de la réponse impulsionnelle la fonction de transfert de l'articulation. La fonction de transfert dépend des caractéristiques de l'articulation, par exemple d'une constante de raideur et une constante de amortissement. Or, à partir de la réponse impulsionnelle il est possible de déduire ces caractéristiques. Il est donc important, pour simplifier les calculs, de connaître un modèle théorique de l'articulation.

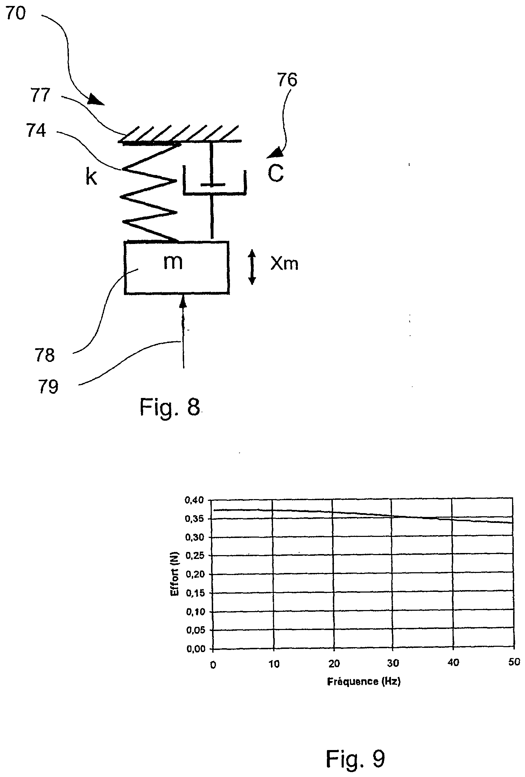

La figure 8 montre un principe de fonctionnement schématique d'un contrôle d'une articulation hydro élastique par impact. L'articulation 70 comprend un ressort 74 et un amortisseur 76 qui sont connectés en parallèle entre une première armature 77 et une deuxième armature 78 ayant une masse m. Le ressort 74 a une constante de raideur k et l'amortisseur 76 a une constante d'amortissement C. La première armature 77 est fixée et la deuxième armature 78 est impactée par un effort 79. La deuxième armature exerce après l'impact une oscillation avec une amplitude décroissante. La valeur de déplacement de la deuxième armature 78 est désignée Xm.

Dans un modèle mathématique l'articulation peut être décrite avec une équation différentielle du second ordre :

$$m\ddot{x} + C\dot{x} + kx = F_0 \cos \omega t$$

A partir de l'équation différentielle il est possible de déduire les équations de déplacement de la masse 78 :

$$Xm = \frac{F_0}{\sqrt{\left(k - m\omega^2\right) + C^2\omega^2}}$$ ;

et

$$tg\varphi = \frac{C\omega}{k - m\omega^2}$$

On peut calculer à partir des équations de déplacement de la masse m la constante de raideur k du ressort 74 est la constante d'amortissement C du amortisseur 76 :

$$k = \frac{F_0}{Xm} \times \frac{1}{tg\varphi\sqrt{1 + \frac{1}{tg\varphi^2}}} + m\omega^2$$

$$C = \frac{F_0}{Xm} \times \frac{1}{\omega\sqrt{1 + \frac{1}{tg\varphi^2}}}$$

Or, à partir de la fonction de transfert de l'articulation effort/Xm (déplacement de l'articulation) il est possible de déduire les paramètres k et C. Il est à noter que la constante de raideur et la constante d'amortissement dépend de la fréquence $\omega$ et le déphasage $\varphi$. Dans une production d'une articulation il est important de connaitre les caractéristiques dans une ou plusieurs plages de fréquence données pour déterminer les produits défectueux et exempts d'erreur.

La figure 9 montre l'impulsion du générateur d'impact dans l'espace de fréquence de 0 à 50 Hz. Dans l'espace de fréquence l'impulsion du générateur d'impact est presque constante avec une légère pente. Une impulsion de Dirac parfaite serait dans l'espace de fréquence constante.

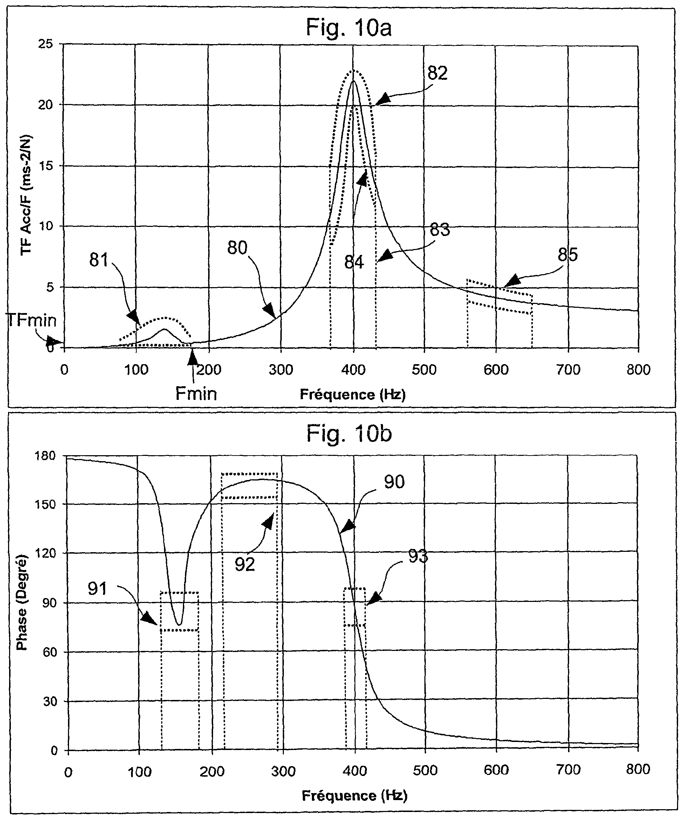

La figure 10 résume et compare les courbes issues de l'analyse fréquentielle quand on utilise la méthode des impacts suivant la présente invention. Contrairement à la méthode actuelle qui utilise un générateur de signal sinusoïdal d'amplitude constante et avec laquelle on ne mesure généralement que 3 points de mesure de raideur et de phase à trois fréquences différentes, on utilise avec la présente invention une sortie graphique de l'analyse fréquentielle donnant le module et la phase sur toute la plage de fréquence. Le module est défini comme le ratio entre l'accélération de l'armature excitée par l'impact d'une part et l'effort exercé par l'impact d'autre part.

La courbe de module en fonction de la fréquence est représentée par la courbe 80 en partie 10a de la figure 10. L'ordinateur d'analyse des résultats garde en mémoire et éventuellement fait apparaître à l'écran un certain nombre de zones pour lesquelles le respect d'une consigne est nécessaire pour que la pièce soit déclarée bonne. Par exemple la courbe hachurée 81 indique qu'entre 100 et 200 Hz on doit passer par une petite résonance puis par un minimum dont on doit s'assurer qu'il est inférieur ou égal à une valeur imposée TFmin pour une fréquence Fmin comprise entre 140 et 150 Hz par exemple. La courbe 81 donne également une valeur maxi au module désigné par TF Acc/F sur toute la plage entre 100 et 200 Hz. Par exemple, la courbe issue de l'analyse fréquentielle peut présenter une petite résonance, alors un maximum relatif, un minimum relatif et ensuite un maximum absolu. La valeur du minimum relatif peut être comparée à la valeur prédéterminée TF Acc/F et la fréquence peut être comparée avec la plage de fréquence de 140 à 150 Hz. Dans un mode de réalisation la valeur de module de la petite résonance peut donner des informations sur la qualité ou les caractéristiques du membre hydraulique de l'articulation hydro élastique. Dans un exemple, la courbe 81 correspond à une enveloppe ou une bande passante autorisée. La raison de la non-conformité est affichée par l'ordinateur ou peut être accessible en interrogeant ce dernier. De même on contrôlera que pour le pic de résonnance au voisinage de 400 Hz, sur une plage de fréquence définie par la courbe 83, le module est compris entre les valeurs données par les courbes 82 et 84. Or, les courbes 82 et 84 définissent une enveloppe. De même, et il s'agit là d'exemples non limitatifs, on peut imposer que la courbe de module sur une plage de module entre 550 Hz et 650 Hz est comprise dans un faisceau enveloppe défini par les courbes 85 et donnant bien l'exemple de ce qu'on appelle « bande passante autorisée ». Dans un exemple, la bande passante autorisée ou enveloppe, en particulier les valeurs maximales autorisées et les valeurs minimales autorisées, suit ou suivent la courbe de module, en particulier d'une articulation de référence. Les valeurs maximales autorisées et les valeurs maximales autorisées peuvent avoir une distance entre eux de moins de 15 pour cent de la valeur maximale de la courbe de module d'une articulation de référence. Toute articulation qui, lors du contrôle avec le procédé par impact suivant la présente invention, ne respecte pas les consignes ci-dessus est déclarée non-conforme. Donc non seulement la fréquence de résonance et la valeur du pic de résonance sont comparées avec une valeur prédéterminée respective mais aussi les caractéristiques de l'amortissement de l'articulation hydro élastique.

Donc, avec le procédé décrit ci-dessus les valeurs de module sont comparées avec des valeurs de référence prédéterminées dans plusieurs plages ou bandes de fréquence limitées prédéterminées dans le domaine de fréquence. Les valeurs de référence prédéterminées peuvent être, par exemple, des consignes ou une bande passante autorisée ou une enveloppe prédéterminée. Une plage de fréquence limitée peut être définie autour de la fréquence du pic de résonance d'une courbe de module de référence dans le domaine de fréquence. Une autre plage de fréquence limitée peut être définie autour d'une fréquence où le module présente dans le domaine de fréquence un maximum relatif. Le maximum relatif peut être situé à une fréquence inférieure à la fréquence du pic de résonance. Dans un mode d'exécution, la valeur de consigne maximale autour du maximum relatif (cf. par exemple la courbe hachée 81 dans la figure 10a) peut être au moins 5 fois plus petit que la valeur de consigne maximale autour du pic de résonance (cf. par exemple la courbe hachée 82 dans la figure 10a).

Dans un mode de réalisation, pour identifier les pièces bonnes des mauvaises lors de l'analyse fréquentielle de l'oscillation de l'articulation impactée, la courbe de module issue de l'analyse fréquentielle est comparée dans au moins deux plages de fréquence limitées avec une valeur maximale et/ou minimale respective ou une courbe définissant des valeurs maximales et/ou minimales et/ou une bande passante prédéterminée acceptable dans la plage de fréquence limitée considérée. De préférence ces plages de fréquence limitées sont écartées l'une de l'autre. Par exemple, ces deux plages de fréquence limitées peuvent être écartées de 100 à 200 Hz. Une plage de fréquence limitée peut avoir une largeur de 30 à 150 Hz.

La courbe 90 donnant l'analyse fréquentielle de phase est représentée en partie 10b de la figure 10. Là encore on peut imposer que sur des plages de fréquences données la valeur du déphasage soit comprise entre une borne mini et une borne maxi comme le donnent les courbes 91, 92 et 93 ou dans une bande passante prédéterminée. Or, dans un exemple les courbes 91, 92 et 93 définissent une enveloppe. La borne mini et la borne maxi peuvent avoir, dans un exemple, une distance maximale entre eux de moins de 15 degrés. Une première plage de fréquence est définie entre environ 130Hz et 180, où la courbe de déphasage de référence présente un minimum relatif, en particulier autour d'un déphasage de 90 degrés. Une deuxième plage de fréquence limitée est définie entre environ 220 et 280Hz, où la courbe de déphasage de référence présente un maximum relatif autour d'une valeur de déphasage de 180 degrés suivant le minimum relatif. Une troisième plage de fréquence limitée est définie autour de 400 degrés, où la courbe de déphasage présente un passage de 90 degrés. On peut aussi n'imposer qu'un minimum sur telle plage de fréquence et qu'un maximum sur telle autre plage. Dans un mode d'exécution, pour identifier les pièces bonnes des mauvaises lors de l'analyse fréquentielle de l'oscillation de l'articulation impactée, la courbe de déphasage issue de l'analyse fréquentielle est comparée dans au moins deux plages de fréquence limitées avec une valeur maximale et/ou minimale respective ou une courbe représentant des valeurs maximales et/ou minimales acceptables dans la plage de fréquence limitée considéré. De préférence ces deux plages de fréquence limitées sont écartées l'une de l'autre.

Le lecteur comprendra que les enveloppes, valeurs minimales ou maximales imposées sont définies non seulement en fonction des cahiers des charges client mais aussi de la propre expérience du fabricant d'articulation compte tenu des défauts de fabrication possibles. L'exploitation des résultats permet aussi de sortir des statistiques par type de défauts rencontrés, ou des courbes de Gauss permettant de recentrer la fabrication. Le type de défaut permet aussi avec l'expérience de connaître son origine ; par exemple un manque matière dans telle zone de caoutchouc, une fuite de la chambre hydro élastique..etc.. L'utilisateur d'un dispositif selon la présente invention testera au préalable des pièces volontairement mauvaises pour étalonner les indications délivrées par l'analyse fréquentielle des résultats. Enfin une pièce bonne ne peut pas être éliminée par erreur parce qu'on l'a testée à telle fréquence sans savoir qu'avec quelques Hz de plus ou de moins la pièce respectait le cahier des charges du client, cas qui arrive assez régulièrement avec le processus actuel n'utilisant pas la présente invention.

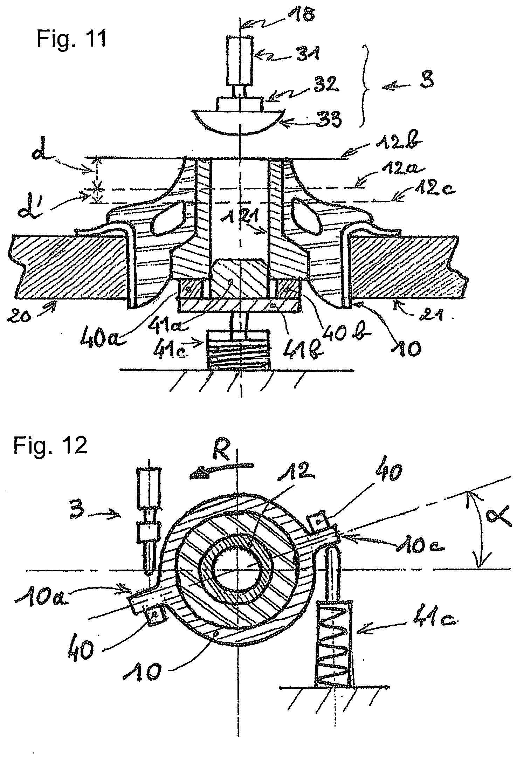

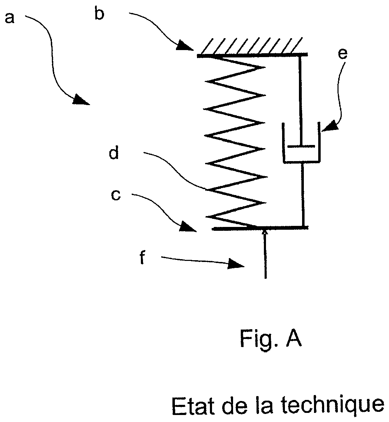

La figure 11 représente une articulation type cale hydro élastique, similaire à celle de la figure 1, mais montrant une déformation interne. L'armature interne 12 a préalablement été translatée vers le haut d'une valeur « d » sous l'effet d'une charge appliquée par les capteurs de force et d'accélération 40a et 40b. La distance « d » est mesurée suivant l'axe théorique de travail 18 entre le dessus 12a représenté en trait discontinu de l'armature 12 au repos et le dessus 12b de cette même armature 12 quand elle est déplacée par translation. C'est dans cette position déformée sous charge que se fait l'impact de cette même armature 12 par le système 3, tandis que l'armature extérieure 10 reste maintenue fixe par les demi-coquilles 20 et 21. Les capteurs de charge et d'accélération 40a et 40b sont situés sur un plateau 41b, lui-même solidaire d'un dispositif élastique étalonné 41c. Lorsque l'articulation est mise en place entre les deux demi coquilles 20 et 21 le dispositif 41c pousse le plateau 41b jusqu'à un certain effort de poussée choisi au préalable et enregistré par les capteurs 40a et 40b. Un dispositif de centrage 41a permet de bien positionner les capteurs 40a et 40b par rapport à l'armature 12 en coopérant ici avec l'alésage 121. Les capteurs 40a et 40b ont alors une double fonction. Ils servent à limiter la force de déformation de l'articulation avant impact, et ils servent à enregistrer les valeurs d'accélération de l'armature 12 quand elle est impactée. Sans sortir du cadre de la présente invention on peut aussi concevoir le système pour que la déformation de l'articulation par translation de l'armature 12 soit faite par le système d'impact 3 qui dans un premier temps vient en contact avec la face supérieure 12a de l'armature et la pousse sur une distance « d' » jusqu'en position 12c. Pour cela le système d'impact 3 doit être monté sur un autre vérin, non représenté ici, qui commande verticalement l'ensemble 3. Dans un tel cas les capteurs 40a et 40b retrouvent leur simple fonction d'origine telle que décrite dans les figures précédentes.

La figure 12 illustre le même principe de déformation préalable de l'articulation, appliqué cette fois à une articulation destinée à travailler en torsion. On suppose ici une articulation voisine de celle décrite en figure 4 mais pour laquelle on a, préalablement à l'impact, tourné l'armature extérieure 10 d'un angle $\alpha$ par l'action d'un dispositif élastique étalonné 41c qui appuie sur un ergot 10c tandis que l'armature intérieure 12 est maintenue fixe. Un capteur de mouvement et d'accélération 40 reste plaqué par magnétisme sur l'ergot 10a et/ou sur l'ergot 10c. Sans sortir du cadre de la présente invention on peut aussi placer le capteur 40 à tout autre endroit de l'armature 10 pourvu qu'il soit situé à l'opposé du mouvement de rotation « R » que l'impact va communiquer à l'armature 10. Rappelons également que le capteur peut, comme pour toutes les autres applications, être du type sans contact comme un capteur laser travaillant comme un radar de détection des mouvements et accélérations.

**Liste de référence**

| | |
|---|---|
| 1 | Dispositif de contrôle |
| 3 | Dispositif de coups |
| 5 | Coussinet hydroélastique |
| 7 | Douille intérieure rigide |
| 9 | Douille extérieure rigide |
| 11 | Composantes de ressort |
| 13 | Chambre de travail |
| 17 | Logement intérieur |
| 19 | Electroaimant |
| 21 | Capteur d'accélération |
| 23 | Dispositif d'évaluation |
| 25 | Ligne |
| 27 | Arrangement de brides |
| 31 | Tampon |
| 41 | Dispositif d'entraînement pneumatique |
| 43 | Masse de coups |
| 45 | Piston |
| 49,51 | Composantes de ressort |
| 56 | Aimant |
| 53 | Chambre d'avant |
| 70 | Articulation hydro élastique |
| 74 | Ressort |
| 76 | Amortisseur |
| 77 | Armature |

| 78 | Armature |
|----|----------|
| 79 | Impact |
| 80 | Courbe de module |
| 81 | Enveloppe |
| 82 | Courbe |
| 83 | Courbe |
| 84 | Plage de fréquence |
| 85 | Enveloppe |
| 90 | Courbe de déphasage |
| 91 | Courbe |
| 92 | Courbe |
| 93 | Courbe |
| 100 | Générateur d'impact |
| 102 | Tige |
| 104 | Tête d'impact |
| 106 | Pointe d'impact |
| 108 | Capteur d'effort |
| 110 | Actionneur électromagnétique |
| 116 | Contrôleur |
| 120 | Armature |
| 122 | Articulation hydro élastique |
| 124 | Armature |
| 126 | Support |
| R | Axe de rotation |
| k | Constante de raideur |
| C | Constante d'amortissement |
| m | Masse |
| Xm | Déplacement |

Etat de la technique

| a | Articulation |
|---|--------------|
| b | Armature |
| c | Armature |
| d | Ressort |
| e | Amortisseur |
| f | Force |

**Revendications**

**1.** Procédé pour contrôler la qualité, particulièrement la raideur et la phase, d'une articulation destinée à relier deux autres pièces en filtrant la transmission des vibrations entre ces deux autres pièces, ladite articulation appelée à travailler en axial, radial ou en torsion, possédant ou non une ou plusieurs chambres hydro élastiques (17) et étant composées de deux armatures cylindriques concentriques, l'armature intérieure (12, 120) étant en grande partie située dans le volume défini par l'armature extérieure (10, 124), ces deux armatures étant reliées par un ensemble de composants en caoutchouc ou élastomère et le cas échéant de plastique et pièces métalliques, lesdites armatures étant elles-mêmes fixées respectivement aux deux autres pièces que l'articulation relie, **caractérisé en ce qu'**on applique une technique du contrôle par impact à la cadence de la ligne de production des articulations, soit moins de 10 secondes de temps de cycle, pour identifier lors d'une analyse fréquentielle de l'oscillation de la zone d'articulation impactée les pièces bonnes des mauvaises, et **en ce que** des valeurs de déphasage de l'analyse fréquentielle sont comparées avec une bande passante de déphasage autorisée et **en ce que** les valeurs de déphasage issue de l'analyse fréquentielle sont comparées dans au moins deux plages de fréquences limitées données, les plages de fréquence limitée données sont définies dans la plage de fréquences totale de 0 à 2000 Hz.

**2.** Procédé suivant revendication 1, **caractérisé en ce que** les plages de fréquences limitées données étant écartées l'un à l'autre, en particulier d'au moins 10Hz, particulièrement une plage de fréquences limitée étant définie autour d'une valeur de fréquence d'un maximum relatif et/ou d'un minimum relatif du déphasage, en particulier d'une courbe (90) de référence de déphasage, et/ou **en ce que** une plage de fréquences s'étend d'environ 100Hz à environ 200 Hz, en particulier entre environ 120Hz et environ 180Hz, d'environ 200Hz à environ 300 Hz, en particulier entre environ 220Hz et environ 290Hz et/ou d'environ 350Hz à environ 450 Hz, en particulier entre environ 370Hz et environ 430Hz.

3. Procédé selon revendication 2, **caractérisé en ce que** une plage de fréquences est définie autour d'une valeur de fréquence de passage de 90 ou 180 dégrées du déphasage d'une courbe (90) de référence.

4. Procédé pour contrôler la qualité, particulièrement la raideur et la phase, d'une articulation destinées à relier deux autres pièces en filtrant la transmission des vibrations entre ces deux autres pièces, ladite articulation appelée à travailler en axial, radial ou en torsion, possédant ou non une ou plusieurs chambres hydro élastiques (17) et étant composées de deux armatures cylindriques concentriques, l'armature intérieure (12, 120) étant en grande partie située dans le volume défini par l'armature extérieure (10, 124), ces deux armatures étant reliées par un ensemble de composants en caoutchouc ou élastomère et le cas échéant de plastique et pièces métalliques, lesdites armatures étant elles-mêmes fixées respectivement aux deux autres pièces que l'articulation relie, **caractérisé en ce qu'**on applique une technique du contrôle par impact à la cadence de la ligne de production des articulations, soit moins de 10 secondes de temps de cycle, pour identifier lors d'une analyse fréquentielle de l'oscillation de la zone d'articulation impactée les pièces bonnes des mauvaises dans une plage de fréquence totale, en particulier de 0 à 2000 Hz, et **en ce que** des valeurs de module de l'analyse fréquentielle sont comparées avec une bande passante (81) de module autorisée qui enveloppe une courbe de module de référence dans une plage de fréquence limitée, en particulier entre environ 50 et environ 250 Hz, comprise dans la plage de fréquence totale, et **en ce que** la plage de fréquence limitée est définie autour d'une fréquence d'un premier pic de résonance de la courbe (80) de référence, la fréquence du premier pic de résonance ayant une fréquence inférieur à une valeur de fréquence d'un deuxième pic de résonance de la courbe (80) de référence et **en ce qu'**on compare les valeurs de module issue de l'analyse fréquentielle de l'oscillation de l'armature impactée dans deux plages de fréquences limitées, la première plage de fréquence limitée étant définie autour de la fréquence du premier pic de résonance de la courbe de référence et la deuxième plage de fréquence limitée est écartées de la première bande de fréquence limitée.

5. Procédé selon la revendication 4, **caractérisé en ce que** la plage de fréquence limitée s'étend d'environ 5Hz, particulièrement d'environ 100Hz, à environ 200Hz et/ou **en ce que** la deuxième plage de fréquences (82) limitée étant définie autour de la fréquence du deuxième pic résonance de la courbe (80) de référence, étant en particulier le maximum absolu de la courbe de module de référence, de préférence entre environ 350 et environ 450 Hz, et/ou la deuxième plage de fréquences (82) limitée s'étend de environ 500Hz à environ 800 Hz, en particulier entre environ 550Hz et environ 700Hz.

6. Procédé selon l'une quelconques des revendications précédentes, **caractérisé en ce que** l'analyse fréquentielle de l'oscillation de l'armature impactée est comparée en tout ou partie à une bande passante autorisée dans une plage de fréquences totale de 0 à 2000 Hz pour connaître la raison de la non-conformité éventuelle et la fréquence à laquelle elle est apparue, et/ou
**en ce que** la courbe (80) de référence de module ou de déphasage dans l'espace du fréquence est générée par une analyse par impact d'une articulation de référence bonne ou une simulation numérique d'une articulation de référence bonne, et/ou **en ce que** la bande passante autorisée enveloppant la courbe (80, 90) de module ou de déphasage de référence est formée d'une courbe de valeurs de module ou de déphasage maximales et une courbe de valeurs de module ou de déphasage minimales, la courbe des valeurs de module ou de déphasage maximales et minimales ayant en particulier une distance entre eux de moins d'environ 15 pour cent de la valeur maximale de la courbe de module ou de déphasage de référence, en particulier de moins d'environ 10 pour cent, de préférence de moins d'environ 5 pour cent.

7. Procédé selon l'une quelconque des revendications précédentes, **caractérisé en ce que** l'impact est réalisé en moins de 15 millisecondes sur l'armature extérieure (10, 124), et/ou **en ce que** l'impact est réalisé en moins de 15 millisecondes sur l'armature intérieure (12, 120), particulièrement le temps d'impact et l'absence de rebond d'impact étant contrôlés par un capteur intégré à une tête d'impact (33, 104), le capteur étant en particulier un capteur piézo-électrique.

8. Procédé selon l'une quelconque des revendications précédentes, **caractérisé en ce que** l'impact est réalisé en un point de l'armature situé sur l'axe de travail théorique de ladite armature ou l'impact est réalisé en un point de l'armature situé en dehors de l'axe de travail théorique de ladite armature, et/ou

**en ce qu'**un capteur de force (32, 108) et de déplacement (40) destiné à enregistrer les oscillations de l'armature impactée est situé en un point situé sur l'axe théorique de travail de l'armature impactée, et/ou

**en ce qu'**on dispose plusieurs capteurs de force (32, 108) et de déplacement (40) destinés à enregistrer les oscillations de l'armature impactée en des endroits autres que sur l'axe théorique de travail de l'articulation, particulièrement l'analyse fréquentielle de l'oscillation de l'armature impactée étant réalisée de façon simultanée pour tous les capteurs de déplacement (40) en moins de 10 secondes.

9. Procédé selon revendication 8, **caractérisé en ce que** un ou plusieurs capteur(s) de force (32, 108) et de déplacement (40) destiné(s) à enregistrer les oscillations de l'armature impactée est (sont) utilisé(s) pour pousser sur ladite armature de façon à la déplacer en translation par rapport à l'armature fixe ou de façon à la déplacer en rotation d'un angle (a) par rapport à l'armature fixe.

10. Procédé selon l'une quelconque des revendications précédentes, **caractérisé en ce que** l'effort de l'impact sur l'articulation est entre 180N et 300N, de préférence entre 200N et 270N, en particulier autour de 210N.


**Patentansprüche**

1. Verfahren zum Kontrollieren der Qualität, insbesondere der Steifigkeit und der Phase, eines Gelenkes, das dazu bestimmt ist, zwei andere Teile zu verbinden, während die Übertragung der Schwingungen zwischen diesen zwei anderen Teilen gefiltert wird, wobei das Gelenk, das dazu eingesetzt wird, axial, radial oder in Drehung zu arbeiten, eine oder mehrere hydroelastische Kammern (17) aufweist oder nicht und aus zwei konzentrischen zylindrischen Armierungen besteht, wobei die Innenarmierung (12, 120) größtenteils in dem Volumen angeordnet ist, das durch die Außenarmierung (10, 124) definiert ist, wobei diese zwei Armierungen durch einen Satz von Komponenten aus Gummi oder Elastomer und gegebenenfalls aus Kunststoff und Metallteilen verbunden sind, wobei die Armierungen selbst jeweils an den zwei anderen Teilen befestigt sind, die das Gelenk verbindet, **dadurch gekennzeichnet, dass** eine Technik der Stoßkontrolle im Takt der Fertigungslinie der Gelenke, d.h. weniger als 10 Sekunden Zykluszeit, angewendet wird, um bei einer Frequenzanalyse der Schwingung des gestoßenen Gelenkbereichs die guten Teile von den schlechten zu identifizieren, und dadurch, dass die Phasenverschiebungswerte der Frequenzanalyse mit einer zulässigen Bandbreite der Phasenverschiebung verglichen werden und dadurch, dass die Phasenverschiebungswerte, die aus der Frequenzanalyse hervorgegangen sind, in mindestens zwei gegebenen begrenzten Frequenzbereichen verglichen werden, wobei die gegebenen begrenzten Frequenzbereiche in dem gesamten Frequenzbereich von 0 bis 2.000 Hz definiert werden.

2. Verfahren nach Anspruch 1, **dadurch gekennzeichnet, dass** die gegebenen begrenzten Frequenzbereiche voneinander beabstandet sind, insbesondere um mindestens 10 Hz, wobei insbesondere ein begrenzter Frequenzbereich um einen Frequenzwert eines relativen Maximums und/oder eines relativen Minimums der Phasenverschiebung definiert wird, insbesondere einer Referenzkurve der Phasenverschiebung (90), und/oder dadurch, dass sich ein Frequenzbereich von ungefähr 100 Hz bis ungefähr 200 Hz, insbesondere zwischen ungefähr 120 Hz und ungefähr 180 Hz, von ungefähr 200 Hz bis ungefähr 300 Hz, insbesondere zwischen ungefähr 220 Hz und ungefähr 290 Hz, und/oder von ungefähr 350 Hz bis ungefähr 450 Hz, insbesondere zwischen ungefähr 370 Hz und ungefähr 430 Hz, erstreckt.

3. Verfahren nach Anspruch 2, **dadurch gekennzeichnet, dass** ein Frequenzbereich um einen Übergangsfrequenzwert von 90 oder 180 Grad der Phasenverschiebung einer Referenzkurve (90) definiert wird.

4. Verfahren zum Kontrollieren der Qualität, insbesondere der Steifigkeit und der Phase, eines Gelenkes, das dazu bestimmt ist, zwei andere Teile zu verbinden, während die Übertragung der Schwingungen zwischen diesen zwei anderen Teilen gefiltert wird, wobei das Gelenk, das dazu eingesetzt wird, axial, radial oder in Drehung zu arbeiten, eine oder mehrere hydroelastische Kammern (17) aufweist oder nicht und aus zwei konzentrischen zylindrischen Armierungen besteht, wobei die Innenarmierung (12, 120) größtenteils in dem Volumen angeordnet ist, das durch die Außenarmierung (10, 124) definiert ist, wobei diese zwei Armierungen durch einen Satz von Komponenten aus Gummi oder Elastomer und gegebenenfalls aus Kunststoff und Metallteilen verbunden sind, wobei die Armierungen selbst jeweils an den zwei anderen Teilen befestigt sind, die das Gelenk verbindet, **dadurch gekennzeichnet, dass** eine Technik der Stoßkontrolle im Takt der Fertigungslinie der Gelenke, d.h. weniger als 10 Sekunden Zykluszeit, angewendet wird, um bei einer Frequenzanalyse der Schwingung des gestoßenen Gelenkbereichs die guten Teile von den schlechten in einem gesamten Frequenzbereich, insbesondere von 0 bis 2.000 Hz zu identifizieren, und dadurch, dass die Modulwerte der Frequenzanalyse mit einer zulässigen Modul-Bandbreite (81) verglichen werden, die eine Referenzmodul-Kurve in einem begrenzten Frequenzbereich, insbesondere zwischen ungefähr 50 und 250 Hz, umgibt, der in dem gesamten Frequenzbereich enthalten ist, und dadurch, dass der begrenzte Frequenzbereich um eine Frequenz einer ersten Resonanzspitze der Referenzkurve (80) definiert wird, wobei die Frequenz der ersten Resonanzspitze eine Frequenz aufweist, die niedriger als ein Frequenzwert einer zweiten Resonanzspitze der Referenzkurve (80) ist, und dadurch, dass die Modulwerte, die aus der Frequenzanalyse der Schwingung der gestoßenen Armierung hervorgegangen sind, in zwei begrenzten Frequenzbereichen verglichen werden, wobei der erste begrenzte Frequenzbereich um die Frequenz der ersten Resonanzspitze der Referenzkurve definiert wird und der zweite begrenzte Frequenzbereich von der ersten Frequenzbandbreite beabstandet ist.

5. Verfahren nach Anspruch 4, **dadurch gekennzeichnet, dass** sich der begrenzte Frequenzbereich von ungefähr 5 Hz, insbesondere von ungefähr 100 Hz, bis ungefähr 200 Hz erstreckt und/oder dadurch, dass der zweite begrenzte Frequenzbereich (82), der um die Frequenz der zweiten Resonanzspitze der Referenzkurve (80) definiert wird, insbesondere das absolute Maximum der Referenzmodul-Kurve, vorzugsweise zwischen ungefähr 350 und ungefähr 450 Hz, ist und/oder sich der zweite begrenzte Frequenzbereich (82) von ungefähr 500 Hz bis ungefähr 800 Hz, insbesondere zwischen ungefähr 550 Hz und ungefähr 700 Hz, erstreckt.

6. Verfahren nach einem der vorhergehenden Ansprüche, **dadurch gekennzeichnet, dass** die Frequenzanalyse der Schwingung der gestoßenen Armierung ganz oder teilweise mit einer zulässigen Bandbreite in einem gesamten Frequenzbereich von 0 bis 2.000 Hz verglichen wird, um den Grund der eventuellen Nichtkonformität und die Frequenz bei der sie aufgetreten ist, zu kennen und/oder dadurch, dass die Referenzkurve (80) des Moduls oder der Phasenverschiebung in dem Raum der Frequenz durch eine Stoßanalyse eines guten Referenzgelenks oder eine digitale Simulation eines guten Referenzgelenks erzeugt wird und/oder dadurch, dass die zugelassene Bandbreite, die die Referenzkurve (80, 90) des Moduls oder der Phasenverschiebung umgibt, aus einer Kurve von maximalen Modul- oder Phasenverschiebungswerten und einer Kurve von minimalen Modul- oder Phasenverschiebungswerten gebildet wird, wobei die Kurve der maximalen und minimalen Modul- oder Phasenverschiebungswerte insbesondere einen Abstand untereinander von weniger als ungefähr 15 Prozent des Maximalwertes der Referenzkurve des Moduls oder der Phasenverschiebung, insbesondere von weniger als ungefähr 10 Prozent, vorzugsweise von weniger als ungefähr 5 Prozent, aufweist.

7. Verfahren nach einem der vorhergehenden Ansprüche, **dadurch gekennzeichnet, dass** der Stoß in weniger als 15 Millisekunden auf die Außenarmierung (10, 124) erfolgt und/oder dadurch, dass der Stoß in weniger als 15 Millisekunden auf die Innenarmierung (12, 120) erfolgt, wobei insbesondere die Zeit des Stoßes und das Ausbleiben des Rückpralls des Stoßes durch einen Sensor, der in einem Stoßkopf (33, 104) integriert ist, kontrolliert werden, wobei der Sensor insbesondere ein piezoelektrischer Sensor ist.

8. Verfahren nach einem der vorhergehenden Ansprüche, **dadurch gekennzeichnet, dass** der Stoß an einem Punkt der Armierung erfolgt, der sich auf der theoretischen Arbeitsachse der Armierung befindet, oder der Stoß an einem Punkt der Armierung erfolgt, der sich außerhalb der theoretischen Arbeitsachse der Armierung befindet, und/oder dadurch, dass ein Kraft- (32, 108) oder Bewegungssensor (40), der dazu bestimmt ist, die Schwingungen der gestoßenen Armierung aufzuzeichnen, an einem Punkt angeordnet ist, der sich auf der theoretischen Arbeitsachse der gestoßenen Armierung befindet, und/oder dadurch, dass mehrere Kraft- (32, 108) oder Bewegungssensoren (40), die dazu bestimmt sind, die Schwingungen der gestoßenen Armierung aufzuzeichnen, an anderen Punkten als auf der theoretischen Arbeitsachse des Gelenks vorgesehen sind, wobei insbesondere die Frequenzanalyse der Schwingung der gestoßenen Armierung für alle Bewegungssensoren (40) gleichzeitig in weniger als 10 Sekunden durchgeführt wird.

9. Verfahren nach Anspruch 8, **dadurch gekennzeichnet, dass** ein oder mehrere Kraft- (32, 108) oder Bewegungssensor(en) (40), der (die) dazu bestimmt ist (sind), die Schwingungen der gestoßenen Armierung aufzuzeichnen, verwendet wird (werden), um derart auf die Armierung zu drücken, dass sie translatorisch in Bezug auf die feste Armierung verschoben wird oder, dass sie rotatorisch um einen Winkel (a) in Bezug auf die feste Armierung verschoben wird.

10. Verfahren nach einem der vorhergehenden Ansprüche, **dadurch gekennzeichnet, dass** die Kraft des Stoßes auf das Gelenk zwischen 180 N und 300 N, vorzugsweise zwischen 200 N und 270 N, insbesondere um 210 N beträgt.

**Claims**

1. A process for testing the quality, in particular the stiffness and the phase, of a joint for connecting two other parts while filtering vibrations transmitted between these two other parts, said joint being meant to work in axial, radial or torsional direction, disposing or not disposing of one or more hydro-elastic chambers (17) and being composed of two cylindrical concentric support elements, the inner support element (12, 120) being located to a large extend inside the volume defined by the outer support element (10, 124), the two support elements being connected by a set of components made of rubber or elastomer or, if applicable, of plastic and metallic parts, wherein said support elements are themselves respectively attached to the two other parts which the joint connects, **characterized in that** a technique of testing by impact is applied within the timing of the production line of the joint, i.e. less than 10 seconds per cycle, for identifying good parts from bad ones through a frequential analysis of the oscillation of the impacted area of the joint, and **in that** the values of the phase shift of the frequential analysis are compared with a bandwidth of permissible phase shift, and **in that** the values for the phase shift yielded by the frequential analysis are compared in at least two given limited frequency ranges, wherein the given, limited frequency ranges are in particular defined within the range of the total frequency of 0 to 2000 Hz.

2. The process according to claim 1, **characterised in that** the given, limited frequency ranges are spaced apart from each other, in particular by at least 10 Hz, wherein in particular a limited frequency range is defined around a frequency value of a relative maximum and/or a relative minimum of the phase shift in particular of a reference curve for the phase shift (90), and/or **in that** a frequency range extends from about 100 Hz to about 200 Hz, in particular between about 120 Hz and about 180 Hz, from about 200 Hz to about 300 Hz, in particular between about 220 Hz and about 290 Hz, and/or from about 350 Hz to about 450 Hz, in particular between about 370 Hz and about 430 Hz.

3. The process according to claim 2, **characterised in that** a frequency range is defined around a transition frequency value of 90 or 180 degrees of the phase shift of a reference curve (90).

4. Process for testing the quality, in particular the stiffness and the phase of a joint for connecting two other parts while filtering the vibrations transmitted between these two other parts, said joint being meant to work in axial, radial or torsional direction, disposing or not disposing of one or more hydro-elastic chambers (17), and being composed of two cylindrical concentric support elements, wherein the inner support element (12, 120) is to a large extend located inside the volume defined by the outer support element (10, 124), the two support elements being connected by a set of rubber or elastomer components and, if applicable, of plastic or metallic parts, said support elements themselves being respectively attached to the two other parts which the joint connects, **characterised in that** a technique of testing by impact is applied within the timing of the production line of the joint, i.e. less than 10 seconds of cycle time, for identifying good parts from bad ones through a frequential analysis of the oscillation of the impacted area of the joint within a total frequency range, in particular from 0 to 2000 Hz, and **in that** the module values of the frequential analysis are compared to a permissible module bandwidth (81) that envelopes a curve of a reference module within a limited frequency range, in particular between about 50 and about 250 Hz, included in the total frequency range, and **in that** the limited frequency range is defined around a frequency of a first resonance peak of the reference curve (80), wherein the frequency of the first resonance peak has a frequency below a frequency value of a second resonance peak of the reference curve (80), and **in that** the module values yielded by the frequential analysis of the oscillation of the impacted support element are compared in two limited frequency ranges, the first limited frequency range being defined around the frequency of the first resonance peak of the reference curve and the second limited frequency range being spaced apart from the first limited frequency range.

5. The process according to claim 4, **characterised in that** the limited frequency range extends from about 5 Hz, particularly from about 100 Hz, to about 200 Hz, and/or **in that** the second limited frequency range (82) which is defined around the frequency of the second resonance peak of the reference curve (80) is in particular the absolute maximum of the reference module curve, preferably between about 350 and about 450 Hz, and/or the second limited frequency range (82) extends from about 500 Hz to about 800 Hz, in particular between about 550 Hz and about 700 Hz.

6. The process according to one of the preceding claims, **characterised in that** the frequential analysis of the oscillation of the impacted support element is either totally or partially compared to a permissible bandwidth in a total frequency range of 0 to 2000 Hz in order to gain knowledge of the cause of the possible non-conformity and the frequency at which it occurred, and/or
   **in that** the reference curve (80) of the module or the phase shift in the frequency domain is generated by an impact analysis of a good reference joint or by a numeric simulation of a good reference joint, and/or

**in that** the permissible band width enveloping the reference curve (80, 90) of the module or of the phase shift is formed from a curve of maximum module or phase shift values and from a curve of minimum module or phase shift values, the curves of maximum and minimum module or phase shift values having in particular a distance between each other of less than about 15 percent of the maximum value of the reference curve of the module or phase shift, in particular of less than about 10 percent, preferably of less than about 5 percent.

7. The process according to one of the preceding claims, **characterised in that** the impact is realised in less than 15 milliseconds on the outer support element (10, 124), and/or
**in that** the impact is realised in less than 15 milliseconds on the inner support element (12, 120), in particular the duration of the impact and the absence of impact rebound are tested by a sensor integrated in an impact head (33, 104), the sensor being in particular a piezoelectric sensor.

8. The process according to one of the preceding claims, **characterised in that** the impact is produced at a point of the support element located on the theoretical working axis of said support element or the impact is produced at a point of the support element located outside the theoretical working axis of said support element, and/or
**in that** a force (32, 108) and displacement sensor (40) for recording the oscillations of the impacted support element is located at a point located on the theoretical working axis of the support element, and/or
**in that** that several force (32, 108) or displacement sensors (40) for recording the oscillations of the impacted support element are disposed at locations other than the theoretical working axis of the support element, in particular the frequential analysis of the oscillation of the impacted support element is realised simultaneously for all the displacement sensors(40) in less than 10 seconds.

9. The process according claim 8, **characterised in that** one or several force (32, 108) and displacement sensor(s) (40) for recording the oscillations of the impacted support element is (are) used for pushing onto said support element such that it is translationally displaced with respect to the fixed support element or such that it is rotationally displaced by an angle ($\alpha$) with respect to the fixed support element.

10. The process according to one of the preceding claims, **characterised in that** the impact load on the joint is between 180 N and 300 N, preferably between 200 N and 270 N, in particular around 210 N.

Fig. 1

Fig. 2

FIG. 3

FIG. 4

VUE AA

FIG. 5

Fig. 6

Fig. 7a

Fig. 7b

70

77

76

74

k

C

m    ↕ Xm

78

79

Fig. 8

Fig. 9

Fig. 10a

Fig. 10b

Fig. 11

Fig. 12

Fig. A

Etat de la technique

**EP 2 263 068 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030172714 A1
- JP 2006292481 A
- DE 10340138 A1
- US 4342229 A
- WO 2006074506 A
- JP 2006292481 B

**Littérature non-brevet citée dans la description**

- **WILLIAM G. HALVORSEN ; DAVID L. BROWN.** *Impulse Technique for Structural Frequency Response Testing,* 30 Novembre 1977
- The Fundamentals of Modal Testing. *Agilent Technologies,* 31 Mai 2000